Europäisches Patentamt

European Patent Office

Office européen des brevets

(19)

(11) Numéro de publication: **0 227 490**

**B1**

(12) **. FASCICULE DE BREVET EUROPÉEN**

(45) Date de publication du fascicule du brevet:
02.08.89

(51) Int. Cl.⁴: **C 12 G 3/08**, A 23 L 2/04

(21) Numéro de dépôt: 86400359.5

(22) Date de dépôt: 20.02.86

(54) Boisson à base de chicorée et procédé de préparation de ladite boisson.

(30) Priorité: 10.12.85 FR 8518640

(43) Date de publication de la demande:
01.07.87 Bulletin 87/27

(45) Mention de la délivrance du brevet:
02.08.89 Bulletin 89/31

(84) Etats contractants désignés:
AT BE CH DE GB IT LI LU NL SE

(56) Documents cité:
EP-A-0 116 141
DE-A-2 212 263
FR-A-1 119 206
FR-A-1 330 904
US-A-3 420 676

(73) Titulaire: S.A.R.L. CHICOREE LEROUX, 84, rue
Francois Herbo, F-59310 Orchies (FR)

(72) Inventeur: Leroux, Alain Adolphe André, 25, rue
Jules Roch, F-59310 Orchies (FR)

(74) Mandataire: Lepage, Jean-Pierre, Cabinet Lemoine
& Associés 12, Boulevard de la Liberté, F-59800
Lille (FR)

LIBER, STOCKHOLM 1989

**Description**

L'invention est relative une boisson à base de chicorée ainsi qu'à un procédé de préparation de ladite boisson. Elle trouvera notamment son application dans l'industrie alimentaire pour la fabrication de boissons rafraîchissantes.

La chicorée est un produit connu de très longue date puisqu'on en retrouve la trace 4000 ans avant Jésus Christ. Cette plante était alors régulièrement utilisée et très appréciée pour ses propriétés digestives et apéritives. Divers manuscrits s'y réfèrent, notamment à Athènes, à Alexandrie et à Rome.

Déjà à ces époques reculées, les propriétés thérapeutiques de la chicorée étaient connues.

En particulier, la digestion des aliments est facilitée par l'action de la chicorée qui agit sur la selivation, la déglutition, et l'absorption dans l'estomac en stimulant les glandes de celui-ci, les sucs pancréatiques et biliaires. C'est un cholagogue puisqu'elle favorise la sécrétion biliaire et l'évacuation du flot de la bile dans l'intestin. La chicorée est un régulateur de l'appareil gastro-intestinal sans jamais être drastique.

Diverses études ont montré son action sur les glandes de l'intestin et la stimulation qu'elle suscite sur les mouvements péristaltiques de celui-ci. Des études plus récentes ont montré que son action s'étend également au système nerveux central (WINCKEL), à l'appareil circulatoire (PAECHTNER), au coeur (BAELDEN, BAUDERON, CHAUMETON, HAMEL, MULLER, PARTURIER), au rein (BEL, LECLERC, PARTURIER, DECAUX), au sang (CLEMENT, PLANCHON), la peau (DECAUX, CHAUMETON, MULLER).

La chicorée désintoxique et développe la lactation. ELle est favorablement employée par les diabétiques (WOLF).

La chicorée est considérée comme un tonique amer, non irritant, diurétique et un peu laxatif.

La chicorée ne présente aucune action nuisible et ne souffre d'aucune contre-indication.

TACQUET et BEERENS n'ont décelé aucune toxicité des solutions de chicorée par voie buccale à des doses de 60 g par jour pendant six mois sur des sujets humains volontaires et sains. L'étude révèle l'absence de flèche glycémique chez les diabétiques après absorption d'une forte quantité de chicorée, une action bradycardisante à l'inverse de la caféine qui a une action tachycardisante, et l'accélération du transit intestinal due à la quantité importante de fructose contenue dans la chicorée.

En conclusion, les vertus médicales de la chicorée en font une boisson hygiénique de prédilection.

Toutefois, jusqu'à présent, la chicorée a toujours été absorbée sous forme d'infusion pure ou en mélange avec d'autres produits, tels que du café.

Etant donné les habitudes alimentaires de l'homme, cette forme de préparation de la chicorée limite son usage aux boissons chaudes généralement absorbées le matin lors du petit déjeuner.

Il est regrettable de se priver ainsi d'une boisson aux nombreuses propriétés pour des raisons d'habitude; le but principal de la présente invention est de proposer une boisson rafraîchissante à base de chicorée qui pourra être absorbée avec bénéfice à toute heure.

Une telle élaboration est extrêmement délicate car de nombreuses difficultés doivent être surmontées. En particulier, il est nécessaire de mettre au point un produit dont les propriétés organoleptiques soient appréciées sinon de tous d'au moins une majorité d'individus. Bien entendu, les propriétés thérapeutiques de la chicorée ne doivent pas être détruites par l'apport d'additifs inappropriés et enfin, la fabrication de la boisson doit être réalisable industriellement, c'est-à-dire en grande quantité, un coût de revient relativement faible et le produit obtenu doit être constant dans son goût et ses propriétés.

La recherche pour la mise au point d'un tel produit s'est orientée vers l'élaboration d'une boisson fermentée à base de chicorée. La fermentation permet en effet d'obtenir un produit présentant un goût tonique et légèrement amer, donc idéal pour la réalisation d'une boisson rafraîchissante.

Cependant, la chicorée, de par sa nature très vivante, ne se prête pas à la fermentation et jusqu'à présent, aucun ferment traditionnel n'a pu être employé pour réagir avec la chicorée.

La boisson à base de chicorée destinée à former une boisson rafraîchissante à partir d'une solution de chicorée est caractérisée par le fait qu'elle est le produit d'une fermentation d'un jus de chicorée sucré par un ferment de type Kefir.

Le procédé de préparation d'une boisson à base de chicorée, dans lequel on utilise comme élément de base une solution d'extrait de racines de chicorée torréfiées obtenue par macération, décoction ou infusion de cossettes torréfiées ou séchées de chicorée, est caractérisé en ce que :
- on sucre la solution d'extrait de chicorée,
- on fait fermenter la solution sucrée d'extrait de chicorée par un ferment de type Kefir,
- on contrôle la fermentation,
- on filtre la solution fermentée.

L'invention sera mieux comprise à la lecture de la description suivante accompagnée de dessins en annexe, parmi lesquels :

la figure 1 schématise l'installation expérimentale de production d'une boisson fermentée à base de chicorée,

la figure 2 schématise un exemple d'installation industrielle de production d'une boisson fermentée à base de chicorée.

L'invention est relative une boisson à base de chicorée ainsi qu'à son procédé de préparation. Elle trouvera notamment son application dans l'industrie alimentaire pour la production de boissons rafraîchissantes.

La chicorée à café appartient à la famille des asteraceae sous le nom de Cichorium Intybus L. Il s'agit d'une plante bisannuelle très connue pour le bleu de ses fleurs ligulées. La plante peut atteindre cent centimètres et fleurit de juillet octobre. Elle possède des lacticifères articulés. Les racines pivotantes, grillées et broyées, constituent un produit possédant des vertus qui lui sont nettement propres, particulières et qui peuvent par ailleurs servir de complément au café.

Jusqu'à présent, la chicorée est essentiellement consommée sous forme d'infusion pure en additif avec du café.

Etant donné les nombreuses propriétés bénéfiques de la chicorée, on ne peut que regretter la limitation de sa consommation sous forme de boisson chaude, généralement absorbée lors du petit déjeuner.

Toutefois, contrairement au café qui est une graine et au thé qui est une feuille, la chicorée consommée est une racine, c'est-à-dire un produit extrêmement vivant qu'il est difficile de travailler. En particulier, les racines cherchent toujours à faire des pousses.

Le but de la présente invention a été de rechercher une technique d'obtention d'une boisson rafraîchissante à base de chicorée.

Une boisson rafraîchissante doit nécessairement être faiblement sucrée et présenter une légère saveur tonique et amère pour renforcer l'aspect "frais" du produit.

En outre, la transformation de la chicorée ne doit pas lui faire perdre ses bonnes propriétés.

Pour atteindre les objectifs précédemment cités, c'est vers la fermentation d'un jus de chicorée que se sont dirigées les recherches. Avec toutefois pour restriction qu'il ne faut pas pour autant obtenir un produit fortement alcoolisé.

A priori, la recherche d'un ferment compatible avec un jus de chicorée est vaine. En effet, la chicorée est un produit vivant qui comprend de nombreux agents inhibiteurs aux ferments, ce qui ne lui permet pas de réagir à l'action de la fermentation.

Alors que pour l'Homme de l'Art, la chicorée ne constitue pas un produit de base susceptible de donner lieu à une fermentation, ce qui est confirmé par la majorité des ferments susceptibles d'être utilisés, il s'est trouvé que, selon la présente invention, un type de ferment précis peut réagir sous certaines conditions sur un jus base de chicorée pour produire une fermentation.

Il a été découvert qu'un jus sucré de chicorée, c'est-à-dire rendu proprice à une fermentation, pouvait être fermenté par un ferment du type Kefir.

Cette caractéristique est d'autant plus surprenante que jusqu'à présent l'utilisation du ferment de Kefir s'est strictement limitée aux produits à base de lait. On pourra à cette occasion se reporter à l'article d'Yves VAISSIER publié dans la revue n° 915 de LA TECHNIQUE LAITIERE du 1.12.1977.

Comme cela relève de la description suivante, certaines précautions doivent être prises pour aboutir à une réaction de fermentation. Dans un premier stade, les différents critères à respecter ont été déterminés expérimentalement. Puis, des améliorations ont été apportées pour permettre une fabrication industrielle du produit.

En ce qui concerne la détermination du milieu de fermentation, des essais parallèles ont été menés pour trouver la meilleure solution.

La racine de chicorée est d'une amertume conséquente et est très riche en inuline. Ce composant de la chicorée est un glucofructosanne linéaire de poids moléculaire compris entre 6000 et 8000. Il s'agit d'une forme de stockage dans la racine des sucres produits dans la feuille par la fonction chlorophylienne. Cette substance de réserve s'accumule au cours de la croissance et peut atteindre un taux de 14 %. L'inuline non métabolisable par l'organisme est dégradée en hexoses par la torréfaction, sucres directement assimilables.

En effet, le glucose et le fructose sont absents des cossettes séchées et n'apparaissent qu'à la suite du traitement thermique des cossettes. L'eau à la température ambiante extrait le fructose, le glucose, le saccharose et les oligosaccharides faiblement polymérisés :

extraction à l'eau froide (JAKUBCZAK et BEERENS, 1973)

| Résultats exprimés en g pour 100 g de matière sèche | Sucres totaux | Sucres réducteurs |
|---|---|---|
| cossettes séchées | 57,03 | 3,07 |
| cossettes torréfiées 2h | 63,82 | 27,69 |

L'extraction par l'eau chaude à 70°C solubilise l'inuline non dégradée dans sa totalité par la torréfaction et les sucres plus fortement polymérisés (7,28 %).

Pour obtenir cette solution naturelle de chicorée, trois possibilités peuvent être utilisées, il s'agit de la macération, de l'infusion ou de la décoction.

Comme cela résulte de l'expérience précédente, l'extraction à l'eau froide est presque complète et, par ailleurs, l'infusion ou la décoction libère des composés de la chicorée torréfiée qui seraient susceptibles de précipiter par la suite à basse température. Dans ces conditions, la macération de la chicorée est, notamment sur le plan du coût énergétique, le meilleur procédé d'obtention d'un jus de chicorée.

La macération étant adoptée, les différents paramètres influant sur le procédé ont été analysés.

Tout d'abord, en ce qui concerne la durée de la macération, il a pu être déterminé que l'extrait sec augmente d'abord très fortement pendant la première heure puis se stabilise ensuite.

Différents jus de chicorée ont été préparés à des températures de 20°C, 40°C et 55°C pendant trois heures à une dose de 35 g par litre. On a pu noter qu'en définitive, les valeurs des extraits secs obtenus variaient très faiblement (différence inférieure à 5 %), ce qui ne permet pas d'affirmer que la température constitue un facteur prépondérant dans la préparation.

Il a également été essayé divers types d'agitation pour en déterminer l'influence sur le produit final. Là, les écarts entre les produits fortement ou moyennement agités et nullement agités, sont importants. En particulier, l'agitation nulle ne permet pas une extraction poussée et se caractérise par un rendement peu élevé de l'opération. Par contre, une agitation même moyenne suffit pour que la quasi-totalité de la matière extractible passe en solution.

Enfin, l'influence du dosage en cossettes a été examinée. Il s'agit d'un paramètre capital qui va permettre de déterminer toutes les caractéristiques organoleptiques de la macération de chicorée. De nombreux essais ont été menés qui montrent que, même avec des dosages importants de l'ordre de 45 g par litre, l'extrait sec final varie de façon linéaire en fonction de la dose et ainsi qu'il n'y a pas de saturation de la teneur en matière sèche.

En conclusion, bien que l'utilisation d'une température de macération égale 55°C permet de gagner environ une heure sur le temps total de l'opération, pour des raisons de coût d'énergie, selon la présente invention, une température de macération de 20°C est préconisée, ceci pour une durée minimum de 2 heures 30. La macération étant accompagnée d'une agitation légère.

En ce qui concerne le dosage en cossettes, le choix a été déterminé par une métrologie sensorielle qui a fait ressortir qu'une dose de 35 g par litre satisfait le mieux aux critères recherchés. La coloration développée, soutenue et intense, d'un brun brillant et la saveur plus marquée par les principes amers de la chicorée répondent parfaitement aux objectifs fixés.

Le sucrage du produit est nécessaire pour deux raisons, d'une part en ce qui concerne l'activation de la fermentation et d'autre part l'équilibre de l'amertume de la chicorée.

Des essais en laboratoire ont montré qu'un taux de sucre fixé à 6 % est convenable. Il est nécessaire d'arrêter la fermentation avant la disparition complète du sucre pour atteindre l'équilibre entre les trois saveurs indispensables: amertume, acidité et sucrosité.

A cet égard, l'emploi de sucre cristallisé donc de saccharose pur n'est pas impératif et d'autres produits à pouvoir sucrant et fermentescible peuvent parfaitement être envisagés. C'est ainsi que la mélasse de betterave a été essayée. La mélasse est l'égoût de troisième jet, incristallisable, restant à la fin de l'extraction du sucre à partir des cossettes de betteraves.

Ce produit présente les avantages suivants :
- un taux de sucre et d'azote susceptible d'offrir aux microorganismes des éléments utiles leur croissance,
- sa coloration accentue de façon notable celle de la chicorée torréfiée et le mélange de brun-rougeâtre passe à un brun noir intense très brillant,
- une diminution du coût de production de la boisson grâce à une valorisation d'un sous produit.

La mélasse présente cependant un goût très prononcé et une forte odeur et sa dose dans la boisson devra donc être subordonnée à son seuil de perception gustative.

L'absorption de dilutions successives a permis de fixer le seuil de perception moyen de la mélasse à 12 g par litre. Cette faible valeur réduit l'intérêt économique de son utilisation, toutefois, comme on le verra par la suite, l'emploi de la mélasse présente un intérêt pour le développement de la fermentation.

Le ferment qui a pu être accroché à une solution sucrée de chicorée est du type Kéfir. Peu d'études portent sur l'analyse qualitative et quantitative des grains de Kefir. Tout au plus admettons que les microorganismes du Kefir sont constitués essentiellement de diverses bactéries lactiques et de levure. Cette flore de base est parfois complétée par diverses bactéries: Bacillus, Acetobacter, ...

L'étude bactériologique des grains de Kéfir ayant permis la fermentation du jus sucré de chicorée, a permis d'identifier cinq souches:
- Lactobacillus casei alactosus,
- Lactobacillus cellobiosus,
- Leuconostoc dextranicum,
- Streptococcus lactis,
- une levure.

Une étude plus poussée sur le plan qualitatif a permis de déterminer les différents constituants avec les proportions du ferment. C'est ainsi que l'on a pu décomposer un ferment de type Kéfir selon la répartition suivante:

| | |
|---|---|
| - Lactobacillus casei alactosus | $1.10^8$ cellules/g |
| - Lactobacillus brevis/cellobiosus | $1.10^8$ cellules/g |
| - Streptococcus lactis | $1.10^8$ cellules/g |
| - Streptococcus diacetylactis | $1.10^8$ cellules/g |
| - Leuconostoc mesenteroïdes | |
| | $1.10^8$ cellules/g |
| - Saccharomyces florentinus | $5.10^6$ cellules/g |

4

Une étude de la reproductibilité des ensemencements dans un milieu de fermentation tel qu'il a été défini précédemment a été réalisée.

L'essai a permis de vérifier que le repiquage successif conduit à l'apparition de mauvais goûts à partir du quatrième repiquage.

Comme cela a été décrit précédemment, l'utilisation de la mélasse doit être limitée en raison de son goût prononcé. Toutefois, il a pu être constaté que l'utilisation de la mélasse, non plus au niveau de la fermentation mais au niveau de la préparation des pieds de cuves, présentait un intérêt, notamment pour la standardisation de l'inoculum. En outre, la mélasse, avec une dose minimale de 81,6 g par litre, permet de maintenir l'équilibre entre les différentes espèces du ferment utilisé en favorisant notamment la croissance des bactéries lactiques.

Le contrôle de la fermentation a été étudié pour déterminer les différents paramètres pouvant être utilisés pour détecter l'instant où il est nécessaire d'arrêter la fermentation.

L'évolution de la fermentation a été suivie en contrôlant les facteurs suivants:

- la mesure du pH et la détermination de l'acidité totale,
- le dosage de l'alcool,
- le dosage des sucres totaux,
- le dosage des sucres réducteurs,
- le dénombrement de la flore totale.

Parallèlement, le produit est suivi par des dégustations successives.

L'expérience a été réalisée sur des volumes de cinq litres de jus sucré de chicorée fermenté par 6 g de ferment.

Le meilleur critère qui a pu être déterminé pour le suivi de la fermentation est le contrôle de l'évolution de l'acidité totale, qui est en relation directe avec le goût du produit et qui se prête facilement à une détermination rapide en cours de production.

Le suivi du taux d'alcool qui, selon le but fixé, doit rester inférieur à un degré, n'est guère commode à employer d'où la préférence donnée au taux d'acidité totale.

Les essais ont montré que le produit est bon lorsque l'acidité totale a atteint un taux de 2,5 % en soixante dix heures.

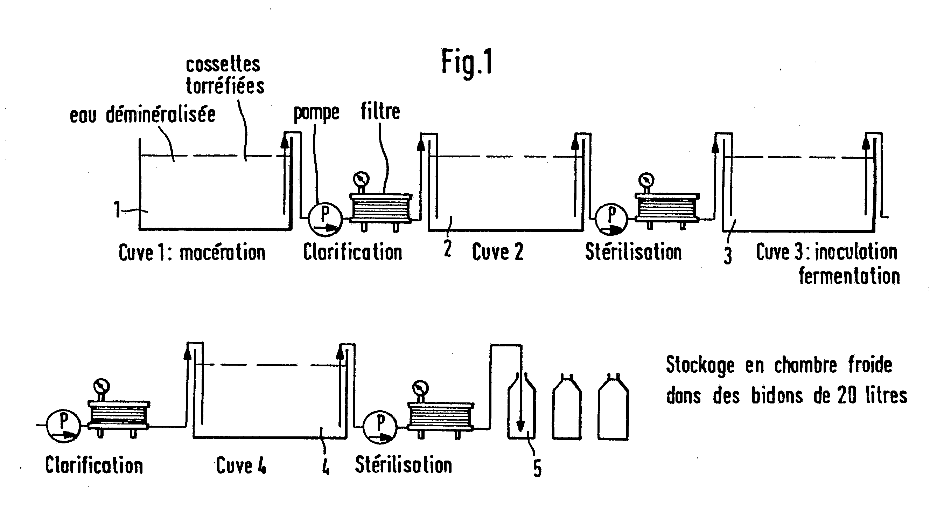

Une installation expérimentale de laboratoire est représentée à la figure 1. Cette installation a été utilisée pour la mise en oeuvre d'une fabrication à échelle semi-industrielle de cent quatre vingts litres.

Cent soixante litres d'une macération de chicorée à 35 g par litre ont été préparés dans la cuve (1) puis filtrés et introduits dans la cuve après 2 heures 30 de macération.

La solution obtenue a été sucrée avec huit litres d'un sirop de sucre à 135 %, soit 10,8 kg pour huit litres.

Le jus sucré obtenu a été stérilisé et introduit dans une cuve (3) de fermentation.

Dix litres de milieu de fermentation ont été préparés à partir de douze grammes de ferment de Kéfir, qui ont fermenté pendant 48 heures. Cette culture en phase exponentielle de croissance a servi d'inoculum pour la fermentation des cent soixante litres. En 70 heures, le taux d'acidité total de 2,5 % a bien été atteint avec une correspondance du goût au critère organoleptique recherché. Parallèlement, un taux d'alcool de 6,2 g par litre a été atteint.

La boisson fermentée est ensuite filtrée dans une cuve (4) puis stérilisée avant sa mise en bidon (5).

Après la filtration, le produit est plat, il a perdu son $CO_2$, ceci uniquement en raison du fait que les essais n'ont pas été réalisés sous pression. Si on désire restituer au produit son $CO_2$, une carbonation peut être réalisée.

Pour la conservation du produit, il s'est avéré qu'une pasteurisation à 72°C pendant 20 minutes permettait de garantir la stabilité du produit.

En effet, sur certaines bouteilles non pasteurisées, des contaminations ont été observées dues à une levure et des cocci.

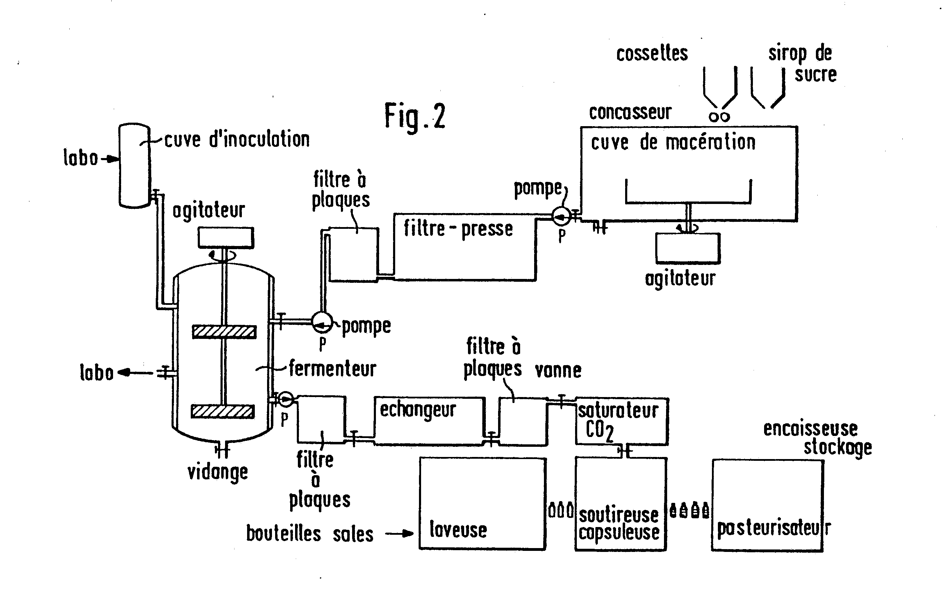

En ce qui concerne la véritable production industrielle dont un mode de réalisation préférentiel d'installation est illustré à la figure 2, certains perfectionnements ont été apportés.

Bien qu'une réaction de fermentation sur une solution concentrée de chicorée présente de gros avantages sur le plan industriel, on a pu noter qu'à priori la chicorée présentait des principes inhibiteurs au Kéfir qui faisaient qu'une solution fortement dosée en chicorée n'accroche pas les ferments de type Kéfir.

Aussi, doit-on utiliser une solution faiblement concentrée en chicorée pour faire fonctionner la fermentation. Il a toutefois été noté que, si cette limitation était exacte pour les premier et deuxième passages, en ce qui concerne les troisième et quatrième passages de solutions de chicorée, celles-ci pouvaient voir leur concentration augmenter sans enrayer le procédé de fermentation. Après le quatrième passage, il est nécessaire d'évacuer le ferment qui s'est fortement multiplié et déstabilisé.

Cette propriété pourra être mise à profit pour améliorer le rendement de l'installation en prévoyant de travailler par passes successives avec une concentration de chicorée progressive.

D'autres mises en oeuvre de la présente invention, à la portée de l'Homme de l'Art, auraient également pu être envisagées sans pour autant sortir du cadre de celle-ci.

## Revendications

1. Boisson à base de chicorée, destinée à former une boisson rafraîchissante à partir d'une solution d'extrait de racine de chicorée, caractérisée par le fait qu'elle est le produit d'une fermentation d'un jus sucré de chicorée par un ferment de type Kéfir.

2. Boisson à base de chicorée, selon la revendication 1, caractérisée par le fait que le ferment de type Kéfir est composé des souches suivantes:
   - Lactobacillus casei alactosus,
   - Lactobacillus cellobiosus,
   - Leuconostoc dextranicum,
   - Streptococcus lactis,
   - une levure.

3. Boisson à base de chicorée, selon la revendication 1, caractérisée par le fait que le ferment de type Kéfir comprend la composition suivante:

| | |
|---|---|
| - Lactobacillus casei alactosus | $1.10^8$ cellules/g |
| - Lactobacillus brevis/cellobiosus | $1.10^8$ cellules/g |
| - Streptococcus lactis | $1.10^8$ cellules/g |
| - Streptococcus diacetylactis | $1.10^8$ cellules/g |
| - Leuconostoc mesenteroïdes | $1.10^8$ cellules/g |
| - Saccharomyces florentinus | $5.10^6$ cellules/g |

4. Procédé de préparation d'une boisson à base de chicorée selon la revendication 1, dans lequel on utilise comme élément de base une solution d'extrait de racine de chicorée obtenue par macération, décoction ou infusion de cossettes torréfiées ou séchées, caractérisé en ce que:
   - on sucre la solution d'extrait de chicorée,
   - on fait fermenter la solution sucrée d'extrait de chicorée par un ferment de type Kéfir,
   - on contrôle la fermentation,
   - on filtre la solution fermentée.

5. Procédé de préparation d'une boisson à base de chicorée selon la revendication 4, caractérisé en ce qu'on sucre la solution d'extrait de chicorée pour obtenir une concentration finale du produit de 6 % en saccharose.

6. Procédé de préparation d'une boisson à base de chicorée, selon la revendication 4, caractérisé en ce qu'on prépare la solution de chicorée par macération de cossettes torréfiées à une dose de 35 g par litre, à une température de 20°C pendant 2 heures 30 minimum avec agitation régulière et moyenne.

7. Procédé de préparation d'une boisson à base de chicorée, selon la revendication 4, caractérisé en ce que le ferment de type Kéfir est préparé sous forme d'inoculum dont le sucre est formé par un mélange de mélasse et sucre pur dont la teneur en mélasse de troisième jet de betteraves est supérieure à 81,6 grammes par litre.

8. Procédé de préparation d'une boisson à base de chicorée, selon la revendication 4, caractérisé en ce qu'on contrôle la fermentation par la mesure du taux d'acidité qui doit atteindre 2,5 % en 70 heures.

9. Procédé de préparation d'une boisson à base de chicorée, selon la revendication 4, caractérisé en ce qu'on réalise une pasteurisation à 72°C pendant 20 minutes de la solution fermentée finale après son refroidissement.

10. Procédé de préparation d'une boisson à base de chicorée, selon la revendication 4, caractérisé en ce qu'on réalise la fermentation de passes successives de jus sucré de chicorée dont les concentrations en chicorée progressent entre les différents passages.

## Patentansprüche

1. Getränk aus Zichorie, das ein erfrischendes Getränk bilden soll und aus einer Zichorienwurzelextrakt-Lösung hergestellt wird, dadurch gekennzeichnet, daß es durch Vergärung eines gezuckerten Zichoriensaftes mittels eines Gärmittels vom Kefir-Typ erhalten wird.

2. Getränk aus Zichorie gemäß Anspruch 1, <u>dadurch gekennzeichnet</u>, daß das Gärmittel vom Kefir-Typ die folgenden Gärungserreger enthält:
   - Lactobacillus casei alactosus,
   - Lactobacillus cellobiosus,
   - Leuconostoc dextranicum,
   - Streptococcus lactis,
   - Hefe.

3. Getränk aus Zichorie gemäß Anspruch 1, <u>dadurch gekennzeichnet</u>, daß das Gärmittel vom Kefir-Typ die folgende Zusammensetzung aufweist:

| | |
|---|---|
| - Lactobacillus casei alactosus | $1.10^8$ Zellen/g |
| - Lactobacillus brevis/cellobiosus | $1.10^8$ Zellen/g |
| - Streptococcus lactis | $1.10^8$ Zellen/g |

| - Streptococcus diacetylactis | $1.10^8$ Zellen/g |
| - Leuconostoc mesenteroïdes | $1.10^8$ Zellen/g |
| - Saccharomyces florentinus | $5.10^6$ Zellen/g. |

4. Verfahren zur Herstellung eines gemäß Anspruch 1 gekennzeichneten Getränkes aus Zichorie, bei dem als Grundkomponente eine Zichorienwurzelextrakt-Lösung verwendet wird, die durch Auslaugen, Abkochen oder Aufgießen von gerösteten oder getrockneten Zichorienschnitzeln erhalten wird, dadurch gekennzeichnet, daß

- die Zichorienextrakt-Lösung gezuckert wird,

- die gezuckerte Zichorienextrakt-Lösung mittels eines Gärmittels vom Kefir-Typ vergoren wird,

- die Gärung überwacht wird,

- die vergorene Lösung filtriert wird.

5. Verfahren zur Herstellung eines Getränkes aus Zichorie gemäß Anspruch 4, dadurch gekennzeichnet, daß die Zichorienextrakt-Lösung gezuckert wird, um eine Endkonzentration von 6 % Saccharose bei dem Getränk zu erhalten.

6. Verfahren zur Herstellung eines Getränkes aus Zichorie gemäß Anspruch 4, dadurch gekennzeichnet, daß die Zichorienlösung durch Auslaugen von gerösteten Zichorienschnitzeln in einer Konzentration von 35 g pro Liter bei einer Temperatur von 20°C während mindestens 2,5 Stunden bei gleichmäßigem, mittelstarkem Rühren hergestellt wird.

7. Verfahren zur Herstellung eines Getränkes aus Zichorie gemäß Anspruch 4, dadurch gekennzeichnet, daß das Gärmittel vom Kefir-Typ in Form eines Impfstoffs hergestellt wird, dessen Zucker aus einem Gemisch aus Melasse und reinem Zucker besteht, wobei der Gehalt dieses Gemischs an Melasse aus der dritten Kochung von Zuckerrüben größer als 81,6 Gramm pro Liter ist.

8. Verfahren zur Herstellung eines Getränkes aus Zichorie gemäß Anspruch 4, dadurch gekennzeichnet, daß die Gärung durch Messen des Säuregrades überwacht wird, der in 70 Stunden 2,5 % erreichen soll.

9. Verfahren zur Herstellung eines Getränkes aus Zichorie gemäß Anspruch 4, dadurch gekennzeichnet, daß die abgekühlte, fertige vergorene Lösung bei 72°C während 20 Minuten pasteurisiert wird.

10. Verfahren zur Herstellung eines Getränkes aus Zichorie gemäß Anspruch 4, dadurch gekennzeichnet, daß die Gärung in aufeinanderfolgenden Durchgängen von gezuckertem Zichoriensaft ausgeführt wird, dessen Konzentration an Zichorie bei den verschiedenen Durchgängen zunimmt.

## Claims

1. A beverage based on chicory, adapted to form a refreshing beverage from a solution of a chicory-root extract, characterized by the fact that it is the product of a fermentation of a sugared juice of chicory by a ferment of Kefir type.

2. A beverage based on chicory according to claim 1, characterized by the fact that the ferment of Kefir type is composed of the following strains:

- Lactobacillus casei alactosus,

- Lactobacillus cellobiosus,

- Leuconostoc dextranicum,

- Streptococcus lactis,

- a yeast.

3. A beverage based on chicory according to claim 1, characterized by the fact that the ferment of Kefir type has the following composition:

| - Lactobacillus casei alactosus | $1.10^8$ cells/g |
| - Lactobacillus brevis/cellobiosus | $1.10^8$ cells/g |
| - Streptococcus lactis | $1.10^8$ cells/g |
| - Streptococcus diacetylactis | $1.10^8$ cells/g |
| - Leuconostoc mesenteroïdes | $1.10^8$ cells/g |
| - Saccharomyces florentinus | $5.10^6$ cells/g. |

4. A process for preparing a beverage based on chicory according to claim 1 in which a solution of a chicory-root extract, obtained by maceration, decoction or infusion of dry chicory roots which are torrefied or dried, is used as raw material, characterized in that:

- the solution of chicory extract is sugared,

- the sugared solution of chicory extract is fermented with the help of a ferment of Kefir type,

- the fermentation is checked,

- the fermented solution is filtered.

5. A process for preparing a beverage based on chicory according to claim 4, characterized in that the solution of chicory extract is sugared in order to obtain a final saccharose concentration of the product of 6 %.

6. A process for preparing a beverage based on chicory according to claim 4, characterized in that a chicory solution is prepared by macerating torrefied dry chicory roots in an amount of 35 g par litre, at a temperature of 20°C during 2 hours 30 to a minimum, with regular and middle stirring.

7. A process for preparing a beverage based on chicory according to claim 4, characterized in that the ferment of Kefir type is prepared in the shape of an inoculum the sugar of which is formed of a molasses mixing and pure sugar, whose the molasses content of the third jet of beets is higher than 81,6 grams per litre.

8. A process for preparing a beverage based on chicory according to claim 4, characterized in that the fermentation is checked by measuring the acidity rate which must attain 2,5 % in 70 hours.

9. A process for preparing a beverage based on chicory according to claim 4, characterized in that a pasteurization of the final fermented solution is realized at 72°C during 20 minutes, after is cooling.

10. A process for preparing a beverage based on chicory according to claim 4, characterized in that the fermentation of successive passes of sugared juice of chicoty is realized, whose the chicory concentrations progress between the different passages.

## Fig.1

eau déminéralisée

cossettes torréfiées

pompe    filtre

Cuve 1: macération    Clarification    2    Cuve 2    Stérilisation    3    Cuve 3: inoculation fermentation

Clarification    Cuve 4    4    Stérilisation    5

Stockage en chambre froide dans des bidons de 20 litres

EP 0 227 490 B1

Fig.2

cossettes · sirop de sucre

concasseur

cuve de macération

agitateur

cuve d'inoculation

labo →

agitateur

filtre à plaques

filtre - presse

pompe

P

labo ←

fermenteur

filtre à plaques   vanne

echangeur

saturateur CO₂

filtre à plaques

pompe

P

vidange

filtre à plaques

encaisseuse stockage

bouteilles sales →

laveuse

soutireuse capsuleuse

pasteurisateur

EP 0 227 490 B1